# EUROPÄISCHE PATENTSCHRIFT

(11) **EP 0 308 949 B1**
(45) Veröffentlichungstag und Bekanntmachung des Hinweises auf die Patenterteilung: **08.09.1993**
(21) Anmeldenummer: 88115636.8
(22) Anmeldetag: 23.09.1988
(51) Int. Cl.: B01D 17/025, E03F 5/16, C02F 1/40

(54) **Leichtflüssigkeitsabscheider**
Light liquids separator
Séparateur de liquides légers

(30) Priorität: 24.09.1987 DE 3732136; 12.04.1988 DE 3812061
(43) Veröffentlichungstag der Anmeldung: 29.03.1989
(73) Patentinhaber: Hammerschmitt, Nikolaus, D-53879 Euskirchen (DE); PROGRESS AG, 39042 Brixen (IT)
(72) Erfinder: Hammerschmitt, Nikolaus, W-5350 Euskirchen (DE)
(74) Vertreter: Döring, Wolfgang, Dr.-Ing. Patentanwälte Hauck, Graalfs, Wehnert, Döring, Siemons

(56) Entgegenhaltungen:
- DE-A- 3 303 632
- DE-A- 3 516 895
- DE-U- 8 600 285
- US-A- 4 111 805

## Beschreibung

Die vorliegende Erfindung betrifft einen Leichtflüssigkeitsabscheider mit den Merkmalen des Oberbegriffs des Patentanspruchs 1.

Ein Leichtflüssigkeitsabscheider dieser Art ist aus der DE-A-3 516 895 bekannt. Beim Gegenstand dieser Veröffentlichung ist der Abscheider in eine Grobabscheidekammer und eine Feinabscheidekammer aufgeteilt, die über einen Durchgangsschacht miteinander in Verbindung stehen. Zwischen beiden Kammern befindet sich eine Trennwand, die vom zuströmenden Gemisch nicht überströmt wird, wie in der Veröffentlichung durch den allerhöchsten Flüssigkeitsstand angedeutet ist. Bei dieser Ausführungsform sind die beiden Kammern hintereinander geschaltet, denn in die zweite Kammer kann im wesentlichen nur Schwerflüssigkeit (mit Resten an Leichtflüssigkeit) über den unten im Abscheider angeordneten Durchgangsschacht gelangen. Zur Ausbreitung der Leichtflüssigkeit auf der Schwerflüssigkeit steht nur die zur Grobabscheidekammer gehörende Fläche zur Verfügung.

Der Erfindung liegt die Aufgabe zugrunde, einen Leichtflüssigkeitsabscheider der angegebenen Art zu schaffen, der sich besonders kostensparend betreiben läßt und einen besonders hohen Wirkungsgrad aufweist.

Diese Aufgabe wird erfindungsgemäß durch einen Leichtflüssigkeitsabscheider der angegebenen Art mit den kennzeichnenden Merkmalen des Patentanspruchs 1 gelöst.

Die Erfindung wendet sich vom vorstehend geschilderten Prinzip der Aufrechterhaltung einer permanenten Verbindung zwischen einer Grobabscheidekammer und einer Feinabscheidekammer ab. Statt dessen wird erfindungsgemäß ein Vorabscheideraum und ein Restabscheideraum vorgesehen, die nur im Betrieb des Abscheiders, d. h. bei einem durch den zulaufbedingten hohen Gemischstand in der Abscheidekammer, über die vorgesehene Überlaufwand miteinander in Verbindung stehen, während sie im Ruhezustand des Abscheiders, wenn sich der Schwerflüssigkeitsspiegel auf die Unterkante der kleinen Abflußöffnung am Schwerflüssigkeitsablauf einstellt, nahezu vollständig voneinander getrennt sind. Im Ruhezustand des Abscheiders kann daher keine Flüssigkeit mehr vom Vorabscheideraum in den Restabscheideraum strömen. Das bedeutet aber auch, daß dann die Schwerflüssigkeit im Vorabscheideraum nicht mehr verdrängt werden kann.

Der Leichtflüssigkeitsablauf ist dem Vorabscheideraum zugeordnet. Hierdurch wird erreicht, daß bei einem Zulauf die aufschwimmende Leichtflüssigkeit sehr rasch unmittelbar in den Leichtflüssigkeitsablauf gelangt und über diesen schnell abgeführt wird. Die aufschwimmende Leichtflüssigkeit gelangt dabei in einen im Vorabscheideraum nach unten führenden Leichtflüssigkeitseinlauf, von dort in einen Leichtflüssigkeitssäulenausgleichsbehälter und vom Leichtflüssigkeitssäulenausgleichsbehälter in einen nach oben führenden Leichtflüssigkeitsauslauf, von dem die Leichtflüssigkeit beispielsweise in einen abgetrennten Speicherraum bzw. Sammelbehälter gegeben wird.

Die zum Restabscheideraum führende Überlaufkante ist über der Unterkante der kleinen Abflußöffnung am Schwerflüssigkeitsablauf und geringfügig über der Oberkante des Lichtflüssigkeitseinlaufs angeordnet. Hierdurch besteht in der Phase, in der der Schwerflüssigkeitsspiegel von der Überlaufkante des Schwerflüssigkeitsablaufs bis zur Unterkante der kleinen Abflußöffnung absinkt, anfangs noch eine Verbindung zwischen beiden Abscheideräumen, die dann unterbrochen wird, wenn der absinkende Flüssigkeitsspiegel das Niveau der Überlaufkante des Restabscheideraumes erreicht hat. Von diesem Zeitpunkt an sind bei weiter absinkendem Flüssigkeitsspiegel Vorabscheideraum und Restabscheideraum im wesentlichen voneinander getrennt. Der Flüssigkeitsspiegel im Vorabscheideraum stellt sich daher ebenfalls etwa auf dem Niveau der Überlaufkante des Restabscheideraumes ein.

Vorteilhafterweise steht jedoch der Leichtflüssigkeitssäulenausgleichsbehälter im Bereich seines unteren Endes über eine Druckausgleichsöffnung mit dem Restabscheideraum in Verbindung. Diese Druckausgleichsöffnung ist vorzugsweise seitlich versetzt zum Leichtflüssigkeitseinlauf (Tauchrohr) angeordnet. Hierdurch wird ein Verdrängungseffekt für die im Leichtflüssigkeitssäulenausgleichsbehälter befindliche Leichtflüssigkeit erzielt.

In Weiterbildung besitzt der Leichtflüssigkeitsablauf desweiteren ein aus dem Vorabscheideraum nach oben heraus führendes Leichtflüssigkeitsablaufsteigrohr. Bei dieser Ausführungsform sind somit zwei Ablaufmöglichkeiten für die Leichtflüssigkeit vorgesehen. Hierbei wird die im Leichtflüssigkeitsablaufbereich vor dem Restabscheideraum auf der Oberfläche angestaute Leichtflüssigkeitsschicht teilweise direkt über das Steigrohr in einen Leichtflüssigkeitsspeicher außerhalb des Abscheiders abgeführt. Da hierbei nur die Leichtflüssigkeitssäule über dem Schwerflüssigkeitsspiegel nutzbar ist, bleibt eine Mindestleichtflüssigkeitsschicht zurück, die beim nächsten Ruhestand restlos in den Leichtflüssigkeitssäulenausgleichsbehälter unter dem Schwerflüssigkeitsspiegel abläuft.

Eine Leichtflüssigkeitsrückhaltewanne entfällt hierbei, da die Schwerflüssigkeit vor dem eigentlichen Abscheider (Restabscheideraum) nicht verdrängbar ist.

Die dem Schwerflüssigkeitsablauf zugeordnete kleine Abflußöffnung ist vorzugsweise so tief angeordnet, daß das obere Ende der Leichtflüssigkeitssäule über dem Schwerflüssigkeitsspiegel mit dem äußeren Schwerflüssigkeitsspiegel identisch ist. Die Höhe der Leichtflüssigkeitssäule wird durch die erforderliche Zwischenspeicherung und die anfallende niedrigste Dichte festgelegt. Da der Leichtflüssigkeitssäulenausgleichsbehälter (Leichtflüssigkeitszwischenspeicher) durch die kleine Druckausgleichsöffnung mit dem Restabscheideraum kommunizierend verbunden ist, wird dieser Behälter als Schleuse verwendet, d. h., die Oberkante des zum Leichtflüssigkeitssäulenausgleichsbehälter führenden Leichtflüssigkeitseinlaufs (Tauchrohr) muß geringfügig tiefer angeordnet sein als die zum Restabscheideraum führende Überlaufkante, damit ein weiteres Absinken des Schwerflüssigkeitsspiegels vor dem Restabscheideraum vermieden wird.

Restschwerflüssigkeit gefolgt von der Leichtflüssigkeitsschicht läuft über die Unterkante des Tauchrohres in den Leichtflüssigkeitssäulenausgleichsbehälter (Zwischenspeicher) ein, wobei die Schwerflüssigkeit über die Druckausgleichsöffnung von der Leichtflüssigkeit verdrängt wird und die Leichtflüssigkeit im Ausgleichsbehälter aufsteigt. In diesem Behälter ist die Leichtflüssigkeit bereits aus dem Abwasserkreislauf entfernt und kann nicht mehr zurück, sondern nur noch in den Speicherbehälter außerhalb des Abscheiders treten.

Wie erwähnt, wird durch die erfindungsgemäßen Maßnahmen sichergestellt, daß der Schwerflüssigkeitsspiegel im Vorraum bzw. Vorabscheideraum nicht verdrängbar ist und die Leichtflüssigkeitsschicht über den unverdrängbaren Schwerflüssigkeitsspiegel durch den Leichtflüssigkeitseinlauf (Tauchrohr) in den Ausgleichsbehälter gelangt. In diesem Vorraum vollzieht sich somit eine Vorabscheidung, Grobabscheidung und der Leichtflüssigkeitsablauf. Der Restabscheideraum hat nur noch die Aufgabe der Feinabscheidung.

Durch diese Maßnahmen wird der Wirkungsgrad des Abscheiders ohne Füllkörpereinsatz beträchtlich erhöht. Es sind erhebliche Einsparungen bei teuren Füllkörpern oder Filtern und bei den durchzuführenden Wartungsarbeiten möglich.

Zur Abführung der im Restabscheideraum angesammelten geringen Leichtflüssigkeitsschicht besteht eine Reihe von Möglichkeiten. Zum einen kann in diesem Bereich eine bereits in der DE-A-3 303 632 beschriebene bekannte Ablaufeinrichtung mit Leichtflüssigkeitsrückhaltewanne vorgesehen werden. Zum anderen kann die Leichtflüssigkeit im Ruhezustand des Abscheiders über eine geeignete Einrichtung abgelassen werden. Es ist jedoch nicht unbedingt erforderlich, solche zusätzlichen Maßnahmen durchzuführen.
Da bei erneutem Zufluß zwischen dem Vorabscheideraum und dem Restabscheideraum über die Überlaufkante wieder eine Verbindung hergestellt wird, fließt die Leichtflüssigkeit in den Vorraum (Vorabscheideraum) zurück, so daß eine gleichmäßige Verteilung der Leichtflüssigkeit über die gesamte Abscheidekammer stattfindet und die Leichtflüssigkeit dann im Vorraum mitabgeführt wird.

Zweckmäßigerweise ist der Leichtflüssigkeitseinlauf (Tauchrohr, Kanal oder Schacht) so ausgebildet, daß seine Gesamtlänge der Leichtflüssigkeitssäule über und unter dem Schwerflüssigkeitsspiegel entspricht.

In bezug auf die konstruktive Gestaltung des erfindungsgemäß ausgebildeten Abscheiders haben sich zwei Ausführungsformen als besonders zweckmäßig erwiesen, die in dem nachfolgenden speziellen Beschreibungsteil genauer erläutert werden. Bei der ersten dieser Ausführungsformen ist der Restabscheideraum an seinen beiden Längsseiten mit Überlaufkanten versehen, über die er mit dem Vorabscheideraum in Verbindung steht, während seine zum Zulauf hin weisende Stirnwand im oberen Bereich zum Vorabscheideraum hin geschlossen ist. Hierbei erfolgt die Zuströmung vom Vorabscheideraum zum Restabscheideraum unter der Stirnwand des Restabscheideraums hinweg über zwei seitliche kanalförmige Abschnitte nach oben über die beiden Überlaufkanten in den Restabscheideraum. Bei einer zweiten bevorzugten Ausführungsform besitzt der Restabscheideraum eine seitliche und eine vordere Überlaufwand zum Vorabscheideraum hin. Hierbei erfolgt die Zuströmung von oben über beide Überlaufkanten in den Restabscheideraum.

Der Restabscheideraum kann in mehrere Unterkammern unterteilt sein. Am Boden einer jeden Unterkammer kann eine in der Mitte offene schiefe Ebene angeordnet sein, wobei die Schwerflüssigkeit durch diese Öffnung über ein Steigrohr bzw. einen Schacht und die entsprechende Überlaufkante bzw. kleine Abflußöffnung zum Schwerflüssigkeitablauf geführt wird. Es versteht sich, daß der gesamte Schwerflüssigkeitsablauf aus dem Restabscheideraum nicht mit dem Vorabscheideraum in Verbindung steht.

Vorzugsweise sind die Schwerflüssigkeitsaustrittsöffnungen der einzelnen Unterkammern in Durchflußrichtung derart höhenversetzt angeordnet, daß sich ein zum Schwerflüssigkeitsablauf erweiternder Schwerflüssigkeitsabflußkanal bildet.

Die einzelnen Unterkammern arbeiten unabhängig voneinander jeweils als getrennte Abscheider. Aufgrund der geringeren Abmessungen im Vergleich zu einer einzigen Abscheidekammer entstehen wesentlich weniger Toträume, so daß die Abscheidefunktion über die gesamte Breite und Länge der Unterkammern gewährleistet ist. Die schiefen Ebenen am Boden der einzelnen Unterkammern sind vorzugsweise so ausgebildet, daß sie quer zur Durchflußrichtung des Abscheiders geneigt sind, wobei insbesondere eine beidseitige Neigung zur Mitte des Bodens der jeweiligen Unterkammer bevorzugt wird. In der Mitte, d. h. am tiefsten Punkt der schiefen Ebene, ist die jeweilige Schwerflüssigkeitsaustrittsöffnung vorgesehen, die sich vorzugsweise als Spalt über die gesamte Breite der Unterkammer erstreckt. Demzufolge erfolgt der Abfluß der Schwerflüssigkeit aus der Unterkammer über deren gesamte Breite, wobei durch die beidseitige Neigung Toträume in den Eckenbereichen verhindert werden.

Durch die erfindungsgemäß vorgeschlagene höhenversetzte Anordnung der Schwerflüssigkeitsaustrittsöffnungen aus den Unterkammern bzw. der schiefen Ebenen der jeweiligen Unterkammern wird ein gleichmäßiger Abfluß der Schwerflüssigkeit aus jeder Unterkammer erreicht. Mit anderen Worten, die in Durchflußrichtung erste Unterkammer weist die am tiefsten gelegene Abflußöffnung auf, während die in Durchflußrichtung letzte Unterkammer die am höchsten gelegene Austrittsöffnung besitzt. Dadurch wird verhindert, daß eine gegenseitige Behinderung der aus den jeweiligen Unterkammern abfließenden Teilströme auftritt, und es wird erreicht, daß unter jeder Unterkammer die gleiche Abflußgeschwindigkeit vorherrscht. Auf diese Weise lassen sich Turbulenzen beim Abfluß der Schwerflüssigkeit sowie Rückstaus durch die Abflußöffnungen verhindern, und es wird eine einwandfreie Abströmung der Schwerflüssigkeit zum Schwerflüssigkeitsablauf gesichert.

Die Erfindung wird nachfolgend anhand von zwei Ausführungsbeispielen in Verbindung mit der Zeichnung im einzelnen erläutert. Es zeigen:
- Figur 1a, b und c: eine Seitenansicht, Vorderansicht und Draufsicht auf eine erste Ausführungsform eines Leichtflüssigkeitsabscheiders; und
- Figur 2a, b und c: eine Seitenansicht, Vorderansicht und Draufsicht auf eine zweite Ausführungsform eines Leichtflüssigkeitsabscheiders.

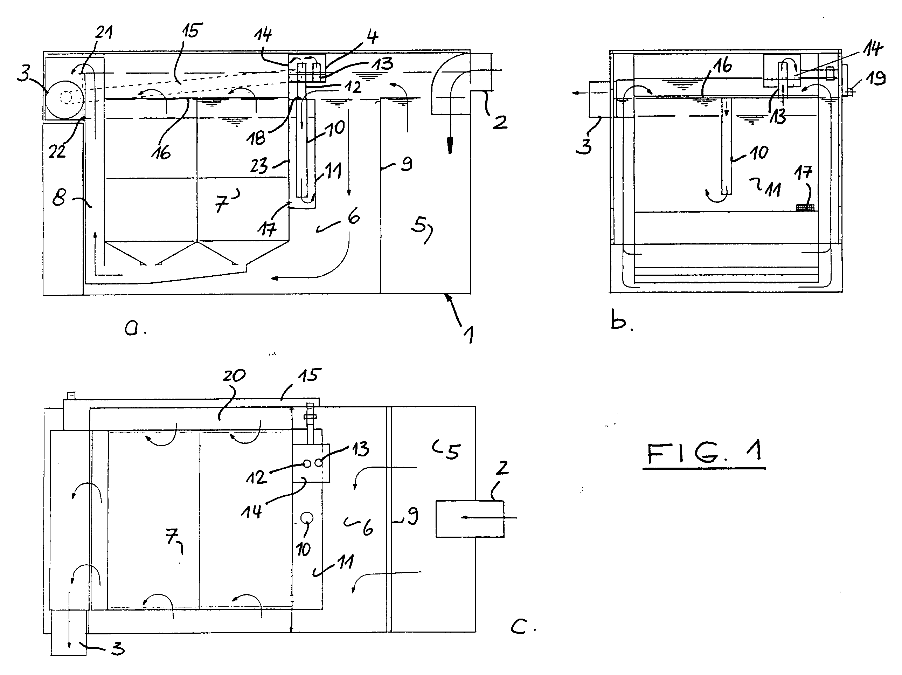

Der in den Figuren 1a, b und c dargestellte Leichtflüssigkeitsabscheider 1 besitzt ein etwa rechteckiges Gehäuse, in das ein nach unten gekrümmter Zulauf 2 für ein Leichtflüssigkeits-Schwerflüssigkeits-Gemisch eingeführt und ein Ablauf 3 für die Schwerflüssigkeit am anderen Ende des Abscheiders herausgeführt ist. In Längsrichtung des Abscheiders ist dieser vom Zulaufende her in einen Schlammfang 5, einen Vorabscheideraum 6 und einen Restabscheideraum 7 unterteilt, wobei die Schwerflüssigkeit vom Boden des Restabscheideraums 7 über einen Steigschacht 8, eine entsprechende Überlaufkante 21 und eine in der zugehörigen Überlaufwand vorgesehene kleine Abflußöffnung 22 bis zum Schwerflüssigkeitsablauf 3 geführt wird. Der Restabscheideraum 7 ist in zwei Unterkammern unterteilt, an deren Boden jeweils eine beidseitig zur Mitte hin geneigte schiefe Ebene angeordnet ist. In der Mitte der schiefen Ebene befindet sich eine Durchtrittsöffnung für die Schwerflüssigkeit, die in die Schwerflüssigkeitsablaufeinrichtung mündet. Der Restabscheideraum 7 sowie die zugehörige Ablaufeinrichtung für die Schwerflüssigkeit sind gegenüber dem Vorabscheideraum 6 mit Schlammfang 5 abgetrennt.

Der Schlammfang 5 und der Vorabscheideraum 6 sind durch eine senkrecht stehende Trennwand 9 voneinander getrennt. Diese Trennwand erstreckt sich bis geringfügig unter die nachfolgend noch beschriebenen beidseitigen Überlaufkanten 16 des Restabscheideraums.

Der Restabscheideraum 7 befindet sich in einem "eingetauchten" Zustand im Vorabscheideraum 6, d. h., er wird sowohl seitlich und von vorne als auch von unten vom Vorabscheideraum 6 umgeben. Zwischen den beiden Längswänden des Abscheiders und den beiden seitlichen Überlaufwänden des Restabscheideraumes befinden sich kanalförmige Abschnitte 20 des Vorabscheideraumes 6, über die Flüssigkeit vom Vorabscheideraum 6 über die Überlaufkanten 16 in den Restabscheideraum 7 gelangt.

Im Vorabscheideraum 6 ist ferner ein Leichtflüssigkeitsablauf 4 angeordnet, der einen Leichtflüssigkeiteinlauf 10 in der Form eines Tauchrohres, einem Leichtflüssigkeitssäulenausgleichsbehälter 11, einen Leichtflüssigkeitsauslauf 12 in der Form eines Steigrohres und einen Leichtflüssigkeitsbehälter 14 aufweist, in den das Steigrohr mündet. Die Oberkante 18 des Leichtflüssigkeitseinlaufs 10 (Tauchrohr) befindet sich geringfügig unter den Überlaufkanten 16 der Seitenwände des Restabscheideraumes 7. Die Länge des Leichtflüssigkeitseinlaufes 10 entspricht der Gesamthöhe der Leichtflüssigkeitssäule über und unter dem Schwerflüssigkeitsspiegel. Die Oberkante 18 ist so hoch über dem Schwerflüssigkeitsspiegel im Ruhestand angeordnet wie die Leichtflüssigkeitssäule über dem Schwerflüssigkeitsspiegel.

Der Leichtflüssigkeitsablauf 4 umfaßt bei diesem Ausführungsbeispiel desweiteren eine Ablaufeinrichtung in der Form eines Steigrohres 13, das unmittelbar in den Leichtflüssigkeitsbehälter 14 mündet und die direkt in das Steigrohr 13 gedrückte Leichtflüssigkeitsschicht abführt. Aus dem Leichtflüssigkeitsbehälter 14 wird die Leichtflüssigkeit über ein Rohr 15 abgeführt.

Desweiteren besitzt der Abscheider einen Leichtflüssigkeitssicherheitsablauf 19.

Im unteren Bereich des Leichtflüssigkeitssäulenausgleichsbehälters 10 ist eine Druckausgleichsöffnung 17 vorgesehen, über die der Leichtflüssigkeitssäulenausgleichsbehälter 11 mit der vorderen Unterkammer des Restabscheideraumes 7 in Verbindung steht.

Das über den Zulauf 2 zuströmende Gemisch wird nach unten in den Schlammfang 5 umgelenkt und steigt im Schlammfang entlang der Trennwand 9 auf und überströmt die Trennwand 9 und gelangt in den Vorabscheideraum 6 und füllt diesen auf. Über die beidseitigen Überlaufkanten 16 gelangt dabei Flüssigkeit in den Restabscheideraum 7, so daß auch dieser aufgefüllt wird. Es stellt sich dabei der in Figur 1a dargestellte obere Spiegel ein, der genau der Höhe der Überlaufkante 21 am Schwerflüssigkeitsablauf entspricht. Hierbei wird bereits Leichtflüssigkeit über das Steigrohr 13 in den Leichtflüssigkeitsbehälter 14 abgedrückt. Strömt kein weiteres Gemisch zu, sinkt der Spiegel allmählich bis auf die Unterkante der kleinen Abflußöffnung 22 am Schwerflüssigkeitsablauf ab. Dieser Vorgang geht jedoch nur innerhalb des Restabscheideraumes 7 vonstatten, da dieser mit dem Schwerflüssigkeitsablauf in Kontakt steht, während der Spiegel im Vorabscheideraum nur bis zur Höhe der Überlaufkante 16 absinkt. Hierbei wird die Leichtflüssigkeit über den Leichtflüssigkeitsablauf 10 in den Ausgleichsbehälter 11 gedrückt und von dort über den Leichtflüssigkeitsauslauf 12 in den Leichtflüssigkeitsbehälter 14. Die Druckausgleichsöffnung 17 sorgt dafür, daß die Leichtflüssigkeit im Ausgleichsbehälter 11 aufsteigt.

Beim erneuten Zuströmen von Gemisch steigt der Spiegel im Abscheider wieder an, wobei die sich im Restabscheideraum 7 angesammelte geringe Leichtflüssigkeitsschicht durch den ansteigenden Schwerflüssigkeitsspiegel wieder über den gesamten Abscheider verteilt wird und somit ebenfalls über den Leichtflüssigkeitsablauf 4 abgeführt werden kann.

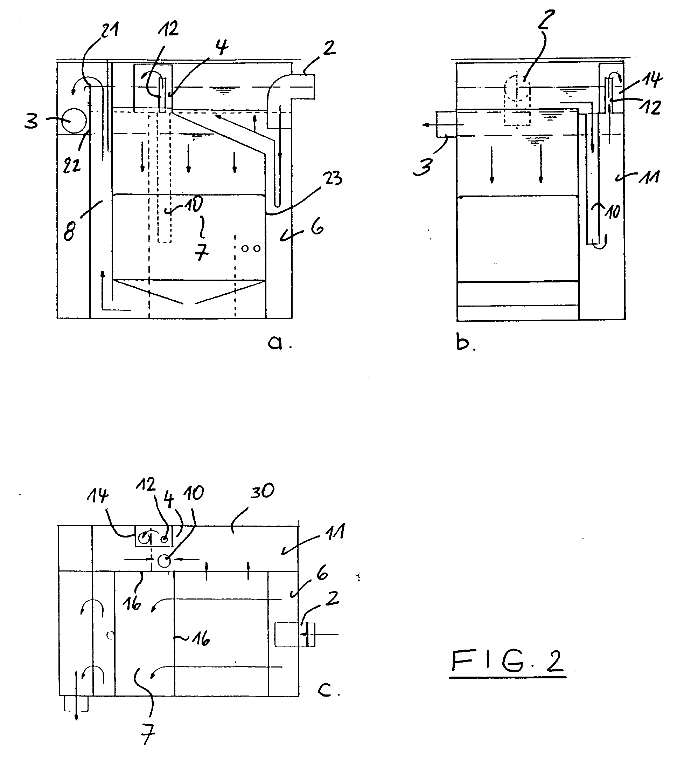

Das in den Figuren 2a, b und c dargestellte Ausführungsbeispiel beruht auf dem gleichen Funktionsprinzip. Lediglich die Konstruktion dieses Ausführungsbeispiels weicht von der der Figur 1 ab, wobei im folgenden nur auf diese abweichenden Konstruktionsmerkmale Bezug genommen wird. Entsprechende Teile wie bei der Ausführungsform der Figur 1 sind mit gleichen Bezugszeichen versehen.

Diese Ausführungsform unterscheidet sich von der der Figur 1 im wesentlichen dadurch, daß der Abscheider keinen getrennten Schlammfang aufweist, daß der Restabscheideraum vom Vorabscheideraum sowohl von vorne als auch seitlich angeströmt wird und daß der Leichtflüssigkeitsablauf kein zusätzliches Steigrohr 13 besitzt. Bei dieser Ausführungsform ist die Stirnwand 23 des Restabscheideraumes 7 im oberen Bereich zum Schwerflüssigkeitsablauf hin abgewinkelt, um eine möglichst große Fläche nichtverdrängbaren Schwerflüssigkeitsspiegels im Vorabscheideraum 6 zu erhalten. Der gesamte Leichtflüssigkeitsablauf 4 ist bei dieser Ausführungsform seitlich neben dem Restabscheideraum 7 angeordnet, wobei sich der Leichtflüssigkeitssäulenausgleichsbehälter 11 im unteren Teil des Abscheiders im wesentlichen über dessen gesamte Länge erstreckt. Über dem Leichtflüssigkeitssäulenausgleichsbehälter 11 befindet sich ein dem Vorabscheideraum 6 zugehöriger Bereich. Der Restabscheideraum 7 weist zwei Überlaufkanten 16 auf, und zwar eine seitliche und eine nach vorne weisende, die am oberen Ende der Stirnwand 23 ausgebildet ist.

Der zum Vorabscheideraum 6 gehörende seitliche, über dem Ölsäulenausgleichsbehälter 11 angeordnete Abscheidebereich 30 gewährleistet, daß bei zuströmendem Gemisch der Restabscheideraum 7 über die entsprechende Überlaufkante 16 nicht nur von vorne, sondern auch von der Seite angeströmt wird.

## Patentansprüche

1. Leichtflüssigkeitsabscheider mit einem Zulauf (2) für ein Leichtflüssigkeits-Schwerflüssigkeits-Gemisch, einer Abscheidekammer zur Trennung von Leichtflüssigkeit und Schwerflüssigkeit, einem Ablauf (4) für die Leichtflüssigkeit und einem Ablauf (3) für die Schwerflüssigkeit, der über eine Überlaufkante (21) und eine kleine Abflußöffnung (22) im Bereich der Ablaufsohle erfolgt, wobei die Abscheidekammer in einen Vorabscheideraum (6) und einen Restabscheideraum (7) unterteilt ist, die im Betrieb des Abscheiders miteinander in Verbindung stehen, und der Leichtflüssigkeitsablauf (4) dem Vorabscheideraum (6) zugeordnet ist und einen im Vorabscheideraum (6) nach unten in einen Leichtflüssigkeitssäulenausgleichsraum (11) führenden Leichtflüssigkeitseinlauf (10) sowie einen vom Leichtflüssigkeitssäulenausgleichsraum (11) nach oben führenden Leichtflüssigkeitsauslauf (12) aufweist, dadurch gekennzeichnet, daß Vorabscheideraum (6) und Restabscheideraum (7) im Betrieb des Abscheiders über eine Überlaufkante (16) miteinander in Verbindung stehen, während sie im Ruhezustand des Abscheiders im wesentlichen voneinander getrennt sind, und daß die zum Restabscheideraum (7) führende Überlaufkante (16) über der Unterkante der kleinen Abflußöffnung (22) am Schwerflüssigkeitsablauf (3) und geringfügig über der Oberkante (18) des Leichtflüssigkeitseinlaufs (10) angeordnet ist.

2. Leichtflüssigkeitsabscheider nach Anspruch 1, dadurch gekennzeichnet, daß der Leichtflüssigkeitsablauf (4) desweiteren ein aus dem Vorabscheideraum (6) nach oben herausführendes Leichtflüssigkeitsablaufsteigrohr (13) aufweist.

3. Leichtflüssigkeitsabscheider nach Anspruch 1 oder 2, dadurch gekennzeichnet, daß der Restabscheideraum (7) an seinen beiden Längsseiten Überlaufkanten (16) aufweist, über die er mit dem Vorabscheideraum (6) in Verbindung steht, während seine zum Zulauf (2) hin weisende Stirnwand (23) im oberen Bereich zum Vorabscheideraum (6) hin geschlossen ist.

4. Leichtflüssigkeitsabscheider nach einem der vorangehenden Ansprüche, dadurch gekennzeichnet, daß der Leichtflüssigkeitsablauf (4) vor dem Restabscheideraum (7) angeordnet ist.

5. Leichtflüssigkeitsabscheider nach Anspruch 1 oder 2, dadurch gekennzeichnet, daß der Restabscheideraum (7) eine seitliche und eine vordere Überlaufwand (16) zum Vorabscheideraum (6) hin aufweist.

6. Leichtflüssigkeitsabscheider nach Anspruch 5, dadurch gekennzeichnet, daß der Leichtflüssigkeitsablauf (4) seitlich neben dem Restabscheideraum (7) angeordnet ist.

7. Leichtflüssigkeitsabscheider nach einem der vorangehenden Ansprüche, dadurch gekennzeichnet, daß der Leichtflüssigkeitssäulenausgleichsbehälter (11) im Bereich seines unteren Endes über eine Druckausgleichsöffnung (17) mit dem Restabscheideraum (7) in Verbindung steht.

8. Leichtflüssigkeitsabscheider nach einem der vorangehenden Ansprüche, dadurch gekennzeichnet, daß dem Vorabscheideraum (6) ein Schlammfang (5) vorgeschaltet ist.

9. Leichtflüssigkeitsabscheider nach einem der vorangehenden Ansprüche, dadurch gekennzeichnet, daß der Restabscheideraum (7) in mehrere Unterkammern aufgeteilt ist.

10. Leichtflüssigkeitsabscheider nach Anspruch 9, dadurch gekennzeichnet, daß die Unterkammern in Durchflußrichtung hintereinander angeordnet sind und daß der Boden der Unterkammern jeweils durch eine mittig mit einer Austrittsöffnung für die Schwerflüssigkeit versehene schiefe Ebene gebildet ist.

11. Leichtflüssigkeitsabscheider nach Anspruch 10, dadurch gekennzeichnet, daß die Schwerflüssigkeitsaustrittsöffnungen der einzelnen Unterkammern in Durchflußrichtung derart höhenversetzt angeordnet sind, daß sich ein zum Schwerflüssigkeitsablauf erweiternder Schwerflüssigkeitsablaufkanal bildet.

12. Leichtflüssigkeitsabscheider nach einem der vorangehenden Ansprüche, dadurch gekennzeichnet, daß der Vorabscheideraum (6) in eine Vorabscheidekammer und einen Schlammfang (5) aufgeteilt ist.

13. Leichtflüssigkeitsabscheider nach einem der vorangehenden Ansprüche, dadurch gekennzeichnet, daß der Restabscheideraum (7) eine Leichtflüssigkeitsablaßeinrichtung aufweist.

14. Leichtflüssigkeitsabscheider nach einem der vorangehenden Ansprüche, dadurch gekennzeichnet, daß der Restabscheideraum (7) eine Leichtflüssigkeitsrückhaltewanne zur Leichtflüssigkeitsabführung aufweist.

## Claims

1. A light liquid separator comprising an inlet (2) for a light liquid/heavy liquid mixture, a separation chamber for the separation of light liquid and heavy liquid, an outlet (4) for the light liquid and an outlet (3) for the heavy liquid which is realized over an overflow edge (21) and a small discharge opening (22) in the range of the bottom of the outlet, wherein the separation chamber is divided in a pre-separation room (6) and a residue-separation room (7) which are connected with one another during the operation of the separator, and the light liquid outlet (4) is associated with the pre-separation room (6) and includes a light liquid inlet (10) extending in the pre-separation room (6) downwardly into a light liquid column balance room (11) and a light liquid outlet (12) extending upwardly from the light liquid column balance room (11), characterized in that during the operation of the separator the pre-separation room (6) and the residue-separation room (7) are connected with one another by means of an overflow edge (16), while they are separated from one another substantially during the inoperative condition of the separator, and that the overflow edge (16) leading to the residue-separation room (7) is disposed above the lower edge of the small discharge opening (22) at the heavy liquid outlet (3) and slightly above the upper edge (18) of the light liquid inlet (10).

2. The light liquid separator according to claim 1, characterized in that the light liquid outlet (4) has furthermore a light liquid outlet rising pipe (13) extending upwardly from the pre-separation room (6).

3. The light liquid separator according to claim 1 or 2, characterized in that the residue-separation room (7) includes overflow edges (16) at its both longitudinal sides, the residue-separation room being connected to the pre-separation room (6) over these overflow edges, while its front wall (23) pointing to the inlet (2) is closed towards the pre-separation room (6) in its upper portion.

4. The light liquid separator according to one of the preceding claims, characterized in that the light liquid outlet (4) is disposed upstream of the residue-separation room (7).

5. The light liquid separator according to claim 1 or 2, characterized in that the residue-separation room (7) has a lateral and a front overflow wall (16) towards the pre-separation room (6).

6. The light liquid separator according to claim 5, characterized in that the light liquid outlet (4) is disposed laterally besides the residue-separation room (7).

7. The light liquid separator according to one of the preceding claims, characterized in that the light liquid column balance container (11) is connected to the residue-separation room (7) by means of a pressure balance opening (17) in the range of its lower end.

8. The light liquid separator according to one of the preceding claims, characterized in that a silt box (5) is disposed upstream of the pre-separation room (6).

9. The light liquid separator according to one of the preceding claims, characterized in that the residue-separation room (7) is divided in several subchambers.

10. The light liquid separator according to claim 9, characterized in that the subchambers are located one behind the other in flow direction and that each bottom of the subchambers is formed by an inclined plane provided in its centre with an outlet aperture for the heavy liquid.

11. The light liquid separator according to claim 10, characterized in that the heavy liquid outlet apertures of the respective subchambers are disposed offset with regard to their heights in flow direction in such a manner that they form a heavy liquid outlet channel enlarging towards the heavy liquid outlet.

12. The light liquid separator according to one of the preceding claims, characterized in that the pre-separation room (6) is divided in a pre-separation chamber and a silt box (5).

13. The light liquid separator according to one of the preceding claims, characterized in that the residue-separation room (7) has a light liquid drain means.

14. The light liquid separator according to one of the preceding claims, characterized in that the residue-separation room (7) has a light liquid retaining trough for the discharge of light liquid.

## Revendications

1. Séparateur de liquide léger, avec une amenée (2) d'un mélange de liquide léger et de liquide lourd, une chambre de séparation destinée à séparer le liquide léger du liquide lourd, une sortie (4) de liquide léger et une sortie (3) de liquide lourd, cette sortie s'effectuant par un bord de surverse (21) et un petit orifice de déverse (22) situé au voisinage de la colonne de sortie, la chambre de séparation se partageant entre une chambre de préséparation (6) et une chambre de séparation résiduelle (7) qui communiquent entre elles lorsque le séparateur est en fonctionnement, la sortie (4) de liquide léger étant associée à la chambre de préséparation (6) et présentant une entrée (10) de liquide léger située dans la chambre de préséparation (6) et conduisant vers le bas dans une chambre (11) d'équilibrage des niveaux de liquide léger, et présentant également une sortie (12) de liquide léger partant de la chambre (11) d'équilibrage des niveaux de liquide léger et conduisant vers le haut, caractérisé en ce que lorsque le séparateur est en fonctionnement, la chambre de préséparation (6) et la chambre de séparation résiduelle (7) sont mises en communication mutuelle par l'intermédiaire d'un bord de surverse (16), tandis que lorsque le séparateur est au repos, ces chambres sont en substance isolées l'une de l'autre, et en ce que le bord de surverse (16) conduisant vers la chambre de séparation résiduelle (7) est disposé au-dessus du bord inférieur du petit orifice de déverse (22) situé sur la sortie (3) de liquide lourd, et est disposé légèrement au-dessus du bord supérieur (18) de l'entrée (10) de liquide léger.

2. Séparateur de liquide léger selon la revendication 1, caractérisé en ce que la sortie (4) de liquide léger présente de surcroît un tube montant (13) de sortie de liquide léger sortant de la chambre de préséparation (6) et conduisant vers le haut.

3. Séparateur de liquide léger selon la revendication 1 ou 2, caractérisé en ce que la chambre de séparation résiduelle (7) présente sur ses deux côtés longitudinaux des bords de surverse (16) qui mettent la chambre de séparation résiduelle (7) en communication avec la chambre de préséparation (6), tandis que la paroi frontale (23) de la chambre de séparation résiduelle (7) tournée vers l'amenée (2) est dans sa partie supérieure fermée en direction de la chambre de préséparation (6).

4. Séparateur de liquide léger selon l'une des revendications précédentes, caractérisé en ce que la sortie (4) de liquide léger est disposée en avant de la chambre de séparation résiduelle (7).

5. Séparateur de liquide léger selon la revendication 1 ou 2, caractérisé en ce que la chambre de séparation résiduelle (7) présente en direction de la chambre de préséparation (6) une paroi latérale de surverse et une paroi avant (16) de surverse.

6. Séparateur de liquide léger selon la revendication 5, caractérisé en ce que la sortie (4) de liquide léger est disposée latéralement à côté de la chambre de séparation résiduelle (7).

7. Séparateur de liquide léger selon l'une des revendications précédentes, caractérisé en ce qu'au voisinage de son extrémité inférieure, le réservoir (11) d'équilibrage des niveaux de liquide léger communique avec la chambre de séparation résiduelle (7), par l'intermédiaire d'un orifice (17) d'équilibrage de pressions.

8. Séparateur de liquide léger selon l'une des revendications précédentes, caractérisé en ce qu'un piège à boues (5) est disposé en avant de la chambre de préséparation (6).

9. Séparateur de liquide léger selon l'une des revendications précédentes, caractérisé en ce que la chambre de séparation résiduelle (7) est fractionnée en plusieurs chambres secondaires.

10. Séparateur de liquide léger selon la revendication 9, caractérisé en ce que les chambres secondaires sont disposées les unes derrière les autres dans la direction d'avancement du liquide, et en ce que le fond de chaque chambre secondaire est formé d'un plan incliné doté en son milieu d'une ouverture de sortie de liquide lourd.

11. Séparateur de liquide léger selon la revendication 10, caractérisé en ce que les ouvertures de sortie de liquide lourd de chacune des chambres secondaires sont décalées en hauteur suivant la direction d'écoulement du liquide, de telle sorte que soit formé un canal de sortie de liquide lourd, ce canal s'élargissant en direction de la sortie de liquide lourd.

12. Séparateur de liquide léger selon l'une des revendications précédentes, caractérisé en ce que la chambre de préséparation (6) est partagée en une enceinte de préséparation et un piège à boues (5).

13. Séparateur de liquide léger selon l'une des revendications précédentes, caractérisé en ce que la chambre de séparation résiduelle (7) présente un dispositif d'extraction de liquide léger.

14. Séparateur de liquide léger selon l'une des revendications précédentes, caractérisé en ce que la chambre de séparation résiduelle (7) présente une cuve de retenue de liquide léger, qui sert à extraire le liquide léger.
